# FASCICULE DE BREVET EUROPEEN

(11) **EP 2 366 281 B1**
(45) Date de publication et mention de la délivrance du brevet: **07.11.2012**
(21) Numéro de dépôt: 11158082.5
(22) Date de dépôt: 14.03.2011
(51) Int. Cl.: A01J 25/16

(54) **Machine de retournement automatique d'objets conditionnés sur claies**
Automatische Wendemaschine für auf Horden konditionierte Gegenstände
Machine for automatically turning over objects conditioned on trays

(30) Priorité: 15.03.2010 FR 1051842
(43) Date de publication de la demande: 21.09.2011
(73) Titulaire: Industrie Développement Etude Construction, 26750 Génissieux (FR)
(72) Inventeur: Baboy, Daniel, 26260 Arthemonay (FR)
(74) Mandataire: Blanchard, Eugène Gilles

(56) Documents cités:
- EP-A1- 0 124 060
- EP-A1- 1 044 601
- EP-A2- 1 329 400
- FR-A1- 2 538 218
- FR-A1- 2 772 232
- FR-A1- 2 807 918

## Description

La présente invention concerne une installation de retournement d'objets tels que des préparations alimentaires, en particulier des fromages ou analogues.

De nombreux produits alimentaires tels que des fromages ou d'autres préparations à base animale ou végétale nécessitent un ou plusieurs retournements au cours de leur fabrication afin que leur constitution et maturation soit homogène.

La fabrication de nombreux fromages notamment comprend une phase d'affinage au cours de laquelle les fromages sont maintenus à plat sur des claies constituées généralement de fil d'acier, éventuellement recouvert d'une feuille perforée, qui permettent un séchage uniforme des fromages. Ces claies sont traditionnellement empilées les unes sur les autres et maintenues écartées pour permettre une circulation d'air entre les claies par des pieds situés à chaque angle des claies et d'une hauteur d'environ 10 cm. Des piles de claies portant les fromages à affiner sont ainsi constituées, d'une hauteur d'environ 1, 50 m, et disposées dans des hâloirs d'affinage, qui sont des locaux à température et hygrométrie contrôlées et adaptées aux conditions d'affinage adéquates des fromages.

Au cours de l'affinage, les fromages doivent être régulièrement retournés sur les claies afin de favoriser leur maturation uniforme. Ces opérations de retournement sont actuellement effectuées manuellement par des opérateurs dans les hâloirs. Pour ce faire, les opérateurs déposent une claie vide à l'envers sur les fromages posés sur la dernière claie d'une pile puis, en serrant légèrement les fromages entre les deux claies, effectue une opération de retournement de la dernière claie de la pile qui devient après retournement la claie à l'envers. Lorsqu'elle est soulevée, les fromages doivent souvent être décollés de fils de la claie ou de la feuille perforée la recouvrant. L'opération de retournement est ensuite reproduite pour chaque claie de chaque pile dans le hâloir.

Ces opérations de retournement manuel s'avèrent problématiques pour différentes raisons. Il s'agit tout d'abord d'une opération répétitive, qui exige des opérateurs des mouvements de grande ampleur, en manipulant une charge lourde qui peut atteindre 15 kg. De ce fait, les opérateurs sont souvent victimes de troubles musculo-squelettiques (TMS). Le cas échéant, pour réduire les risques de TMS, les opérateurs travaillent en binômes pour le retournement. Mais l'opération exige alors un parfais synchronisme au risque de faire chuter les fromages sur le sol avec les pertes correspondantes.

De plus, si les deux claies utilisées pour le retournement ne sont pas correctement serrées les fromages peuvent glisser sur les claies lors du retournement et il ensuite nécessaire de les replacer correctement avec un écartement régulier sur les claies, ce qui rallonge les durées d'opération et augmente la pénibilité de celle-ci étant considérée l'atmosphère particulièrement difficile à l'intérieur des hâloirs (en général au moins 70 à 80% d'humidité maintenue).

Il est donc souhaitable de limiter au maximum les interventions manuelles lors des opérations de retournement dans les hâloirs.

A cette fin diverses propositions d'installations automatiques de retournement ont été faites dans l'état de la technique. On peut citer en particulier les documents FR-A-2 538 218, FR-A-2 772 232 et EP-A-1 042 601 qui tout deux décrivent des installations de ce type. Cependant, ces installations ne s'avèrent pas entièrement satisfaisantes. En particulier, l'installation décrite dans EP-A-1 042 601 s'avère particulièrement encombrante et peu adaptée à une utilisation dans un hâloir où l'espace au sol est optimisé pour permettre un stockage maximal de piles de claies, qu'il convient également de pouvoir déplacer sans les sortir du hâloir. L'installation décrite dans FR-A-2 538 218 est elle aussi particulièrement encombrante. De plus, elle nécessite un mécanisme de chariot mobile verticalement pour saisir les claies à retourner les écarter d'un tapis de convoyage horizontal les retourner en l'air puis les reposer une fois retournées sur le tapis de convoyage. Un tel mécanisme réduit énormément le débit de traitement potentiel de la machine. De plus il nécessite un maintien très important en raison des multiples mouvements à réaliser par le seul mécanisme de chariot qui en affecte la fiabilité.

L'invention vise à résoudre ces inconvénients notamment, pour obtenir un retournement automatisé des produits directement dans les hâloirs, avec un encombrement minimal et une sûreté de fonctionnement et de préservation des produits retournés optimisés.

A cet effet, l'invention propose une installation de retournement automatique d'objets, notamment de préparations alimentaires, conditionnés sur des claies empilées les unes sur les autres, comportant :
- un bâti délimitant une colonne d'entrée dans laquelle peut être placée une pile de claies supportant chacune des objets à retourner et une colonne de sortie dans laquelle peut être formée une pile de claies supportant des objets retournés, et
- un mécanisme de transfert d'une claie supportant des objets à retourner depuis une zone de chargement de claies à retourner dans un dispositif de retournement,
- un mécanisme de transfert d'une claie réceptrice supportant les objets retournés après retournement depuis le dispositif de retournement vers une zone de déchargement.

De façon caractéristique, le dispositif de retournement comporte un tambour à mâchoires mobiles monté mobile uniquement en rotation sur un axe horizontal solidaire du bâti, lesdites mâchoires mobiles étant aptes à saisir et maintenir une claie supportant des objets à retourner contre une claie réceptrice tenue sur une mâchoire du tambour lors du retournement du dispositif de retournement autour de son axe pour retourner les objets. De plus, les mécanismes de transfert comportent un chariot pivotant à bras apte à se déplacer en translation sur un axe solidaire du bâti dans un plan contenant les zones de chargement et de déchargement ainsi que l'axe de rotation du tambour pour respectivement amener une claie supportant des objets à retourner de la zone de chargement dans le mécanisme de retournement et simultanément sortir une claie réceptrice supportant les objets une fois retournés du mécanisme de retournement vers la zone de déchargement.

L'installation de retournement de l'invention procure ainsi un ensemble de traitement de produits à retourner tels que notamment des fromages conditionnés sur des claies qui est à la fois compact, performant et fiable et ne nécessite que très peu de participation d'un opérateur manuel, excepté pour mettre en place et retirer les piles de claies du bâti de l'installation.

De plus, l'installation de l'invention peut également comporter au moins une des caractéristiques additionnelles avantageuses suivantes :
- les mécanismes de transfert comportent un chariot pivotant à bras apte à se déplacer en translation sur un axe solidaire du bâti dans le plan contenant les zones de chargement et de déchargement pour respectivement amener une claie supportant des objets à retourner de la zone de chargement dans le mécanisme de retournement et simultanément sortir une claie réceptrice supportant les objets une fois retournés du mécanisme de retournement vers la zone de déchargement ;
- le chariot pivotant à bras de chaque mécanisme de transfert est monté pivotant sur son axe de translation, qui est perpendiculaire à l'axe de rotation du tambour de retournement ;
- le chariot pivotant à bras comporte des releveurs munis de crochets rotatifs adaptés pour soutenir une claie durant une phase de transfert entre les zones de chargement et de déchargement et le dispositif de retournement, les releveurs s'étendant perpendiculairement au bras du chariot et à son axe de translation ;
- les mécanismes de transfert comportent un chariot à bras pivotant commun mobile en translation et en rotation sur un axe solidaire du bâti, les releveurs étant montés sur le bras du chariot ;
- les mâchoires mobiles du dispositif de retournement comportent des crochets de maintien automatique d'une claie sur les mâchoires, par exemple des crochets à masselotte gravitaire qui maintiennent automatiquement la claie située sous la mâchoire du haut, et libère automatiquement la claie posée sur la mâchoire du bas ;
- les mâchoires mobiles comportent des tapis de serrage des claies, par exemple constitués à base de un matériau souple tel que de silicone ;
- elle comporte des moyens d'entrainement en rotation du dispositif de retournement autour de son axe de rotation et des moyens d'actionnement des mâchoires mobiles dudit dispositif de retournement, par exemple de type mécaniques et pneumatiques et/ou électriques;
- elle comporte des organes de secousse d'une claie retournée, par exemple des marteaux mécaniques et/ou pneumatiques et/ou électriques ;
- elle comportee un mécanisme de chargement d'une claie supérieure d'une pile de claies supportant des objets à retourner placée dans la colonne d'entrée du bâti, apte à déplacer ladite claie supérieure jusqu'à la zone de chargement, située au dessus de la pile.
- le mécanisme de chargement comporte un ascenseur à cliquets aptes à engager et désengager automatiquement la claie supérieure de la pile de claies supportant des objets à retourner dans la colonne d'entrée du bâti pour la soulever et la mener dans la zone de chargement.
- elle comporte un mécanisme de déchargement adapté pour sélectionner la claie réceptrice supportant les objets retournés dans la zone de déchargement et former une pile de claies supportant les objets retournés dans la colonne de sortie du bâti.
- le mécanisme de déchargement comporte un descenseur à cliquets aptes à engager et désengager automatiquement une claie réceptrice supportant les objets retournés dans la zone de déchargement et la mener dans la colonne de sortie pour former une pile de claies supportant des objets retournés.
- le bâti est monté sur des roulettes, le cas échéant motorisées, et comporte des moyens de traction manuels et/ou à moteur.
- elle comporte une armoire de commande, cette armoire de commande comprenant un pupitre de commande et de programmation manuels par un opérateur de la machine, ainsi de préférence que des batteries d'alimentation électriques et/ou des moyens de connexion au réseau électrique.

L'installation de retournement automatique de la présente invention procure ainsi une grande facilité d'utilisation pour les opérateurs au sein des hâloirs, dans un encombrement réduit. Elle permet aux opérateurs de travailler en temps masqué pour uniquement déplacer les piles de claies à retourner et les piles de claies retournées pendant que l'installation effectue le retournement des claies de manière automatique. Ainsi, les risques de troubles musculo-squelettiques liés aux opérations de retournement sont supprimés pour les opérateurs, de même que le risques de glissement et déplacement des produits retournés sur les claies du fait d'un maintient des produits sur toute la surface des claies pendant le retournement.

En outre, l'installation de l'invention permet des cadences de traitement élevées et régulières tout en procurant une adaptabilité à tous les types et épaisseurs de produits à retourner, notamment tous les types de fromages ou autres préparations alimentaires.

Diverses autres caractéristiques ressortent de la description faite ci-dessous en référence aux dessins annexés qui montrent, à titre d'exemples non limitatifs, des formes de réalisation de l'objet de l'invention.
- la **figure 1** représente en perspective l'installation de retournement automatique d'objets selon l'invention dans un mode préféré de réalisation ;
- la **figure 2** représente une vue de détail de la **figure 1** sur un ascenseur de chargement des claies à retourner vers le dispositif de retournement de l'installation de l'invention ;
- la **figure 3** représente une vue de détail de la **figure 1** sur le dispositif de retournement de l'installation de l'invention ;
- les **figures 4A** à **4C** représentent les différentes étapes de prise en charge d'une claie à retourner par le dispositif de retournement de l'installation de l'invention ;
- la **figure 5** représente le mode de transfert des claies à retourner et des claies retournées dans le dispositif de retournement de l'installation de l'invention ;
- les **figures 6** et **7** représentent le mode de serrage des claies dans le dispositif de retournement de l'installation de l'invention ;
- la **figure 8** représente l'opération de retournement d'une paire de claies et d'une préparation alimentaire dans l'installation de l'invention
- les **figures 9A** à **9C** représentent un mode particulier de réalisation du tambour de retournement de l'installation de l'invention.

La présente invention propose une installation de retournement d'objets tels que des préparations alimentaires disposés sur des claies empilées les unes sur les autres, dont une application particulière préférée et décrite ci-après à titre d'exemple concerne le retournement de préparations fromagères au cours de leur affinage dans des hâloirs. Cependant, l'installation de l'invention n'est pas limitée à une application au retournement de fromages mais peut convenir à toutes opérations de retournement d'objets disposés sur des claies ou analogues.

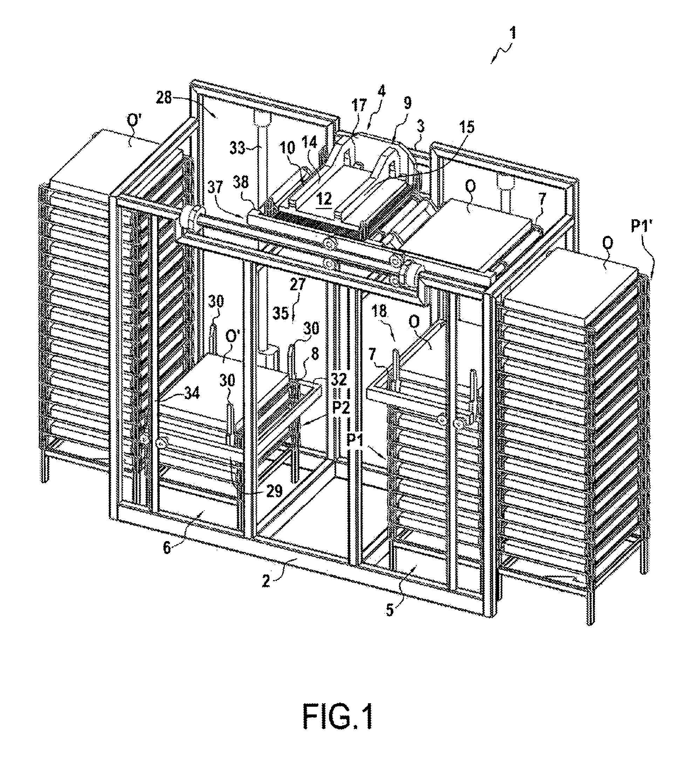

La **figure 1** représente une installation de retournement **1** conforme à la présente invention dans un mode préféré de réalisation.

L'installation **1** comporte un bâti métallique **2** sensiblement parallélépipédique constituant un portique **3** de support d'un dispositif de retournement **4** disposé en une position centrale supérieure du bâti **2** sur le portique **3.** Le bâti métallique **2** délimite par ailleurs de part et d'autre du portique **3** et le dispositif de retournement 4 une colonne d'entrée **5** et une colonne de sortie 6 destinées respectivement à loger une pile **P1** de claies **7** supportant chacune des objets **O** tels que des fromages à retourner et une pile **P2** de claies **8** supportant des objets **O'** retournés.

Le bâti **2** est de préférence monté sur des roulettes afin de pouvoir être déplacé facilement et rapidement, notamment dans des hâloirs d'affinage de fromage par exemple. Il comporte également de préférence à cet effet des moyens de traction manuels et/ou à moteur. En variante, les roulettes du bâti **2** peuvent être des roulettes motorisées.

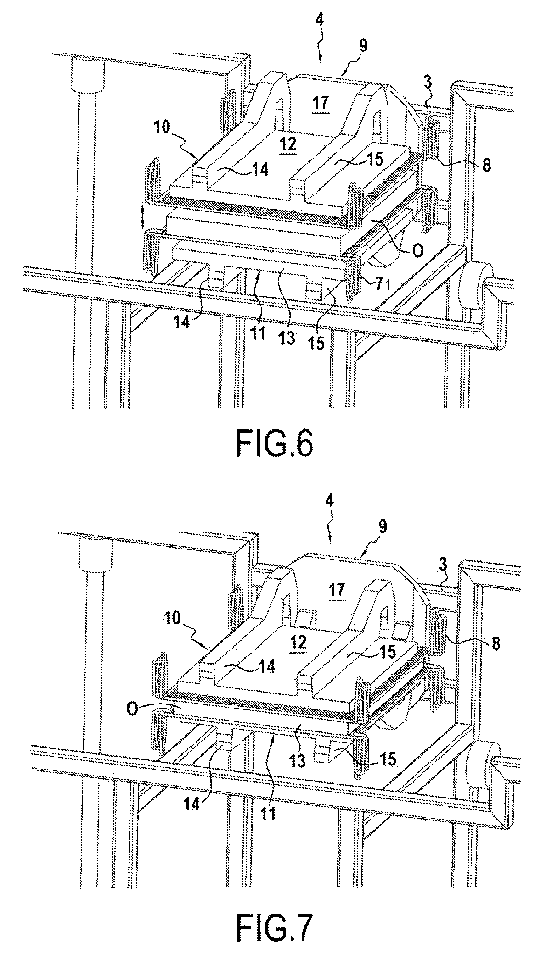

Conformément à l'invention, le dispositif de retournement **4** est conçu pour retourner une par une les claies **7** supportant les objets **O** à retourner depuis la pile **P1** située dans la colonne d'entrée **5** puis positionner les claies retournées **8** dans la colonne de sortie **6** pour y former la pile **P2** de claies **8** supportant les objets retournés **O'.** Comme cela ressort plus clairement des **figures 6** à **8****,** le dispositif de retournement **4** comporte un tambour **9** à mâchoires **10, 11** mobiles. Le tambour **9** est lui même monté mobile uniquement en rotation sur un axe horizontal (non représenté) solidaire du bâti **2** et il coopère avec des moyens d'entrainement en rotation autour de son axe de rotation solidaire du portique **3** du bâti **2,** également non représenté sur les figures. Le tambour **9** ne subit et n'est capable d'aucune translation verticale ou horizontale par rapport au bâti 2 pour éviter tout mouvement de cisaillement des machoires **10,11** du tambour pendant le retournement des objets **O** et assurer un maintien stable des claies **7, 8** pendant le retournement. Un tambour **9** fixe permet aussi d'assurer une cadence de traitement très élevées, que ne peuvent assurer des mécanismes à mouvements multiples comme décrit par exemple dans FR-A-2 538 218.

Ces moyens d'entrainement en rotation du tambour **9** peuvent être de tout type connu et usuel dans le domaine du machinisme industriel et notamment comprendre un moteur électrique et une transmission mécanique, ou encore des moyens d'entrainement hydraulique et/ou pneumatique.

Les mâchoires mobiles **10, 11** du tambour **9** sont formées de plaques **12, 13** solidaires de fourches métalliques **14, 15** fixés de façon coulissante dans des glissières sur un plateau **17** formant une butée postérieure du tambour **9.** Les fourches **14, 15** sont fixées dans leurs glissières sur des platines mobiles actionnées par des moyens d'actionnement des mâchoires mobiles. Les déplacements de ces mâchoires **10, 11** s'effectuent symétriquement à un plan médian passant par l'axe horizontal de rotation du tambour **9.** La symétrisation est assurée au moyen de bielles et biellettes articulées. Ces moyens d'actionnement comprennent de préférence un mécanisme automatisé d'ouverture-fermeture des mâchoires **10, 11,** non représenté sur les figures mais là encore qui peut être de tout type connu (mécanique, pneumatique, hydraulique) apte à actionner les fourches pour opérer de façon séquentielle un serrage puis un écartement des mâchoires pour serrer puis libérer les claies à retourner **7** et les claies retournées **8** comme il sera décrit par la suite.

De façon avantageuse, les mâchoires **10, 11** sont conçus pour saisir et maintenir une claie **7** supportant des objets **O** à retourner contre une claie réceptrice **8** tenue sur une mâchoire **10, 11** du tambour **9** lors du retournement du dispositif de retournement **4** autour de son axe pour retourner les objets **O.**

En pratique, le dispositif de retournement **4** est conçu pour qu'une claie réceptrice ou claie retournée **8** soit maintenue en permanence en position retournée contre la mâchoire supérieure **10, 11** du tambour **9.** Les plaques **12, 13** de chaque mâchoire **10, 11** sont ainsi équipées de façon avantageuse de moyens de maintien d'une claie en position retournée. De tels moyens de maintien peuvent notamment être constitués par des crochets de blocage automatique du type crochets à masselottes, fixés sur les cotés des plaques **12, 13** des mâchoires **10, 11.**

Selon une autre caractéristique, les mâchoires mobiles **10, 11** du dispositif de retournement **4** comportent avantageusement des tapis de serrage des claies **7, 8.** De tels tapis s'avèrent particulièrement utiles pour des applications de retournements de fromages car ils permettent d'effectuer un serrage uniforme des claies **7, 8** lors du retournement par une surface importante d'appui couvrant toute la surface des claies. L'effort de serrage est contrôlé et ajusté à la taille et à la nature des produits à retourner. Ces tapis permettent en outre d'éviter un enfoncement des fils d'acier constituant les claies **7, 8** lors des phases de serrage entre les mâchoires **10, 11** et le retournement des claies dans le dispositif de retournement **4,** ce qui limite les effets de coincement des objets **O,** par exemple des fromages, sur les claies **7** une fois retournées.

De façon préférée, les tapis de serrage revêtant les mâchoires **10, 11,** en particulier la surface interne des plaques **12, 13,** sont constitués à base de silicone ou d'une autre matière souple de qualité alimentaire.

Les tapis de serrage peuvent également être formés de peignes à poussoirs ou picots compensés. Ces tapis passent avantageusement sous la pression des mâchoires **10, 11** sur les produits à retourner à travers les fils des claies **7, 8** et assurent un maintien des produits **O** les moins hauts dans le cas où leur hauteur est irrégulière.

Dans une variante de réalisation préférée, les crochets peuvent également être des crochets automatisés actionnés électriquement et/ou pneumatiquement, par exemple par des vérins embarqués sur une structure porteuse de chaque mâchoire 10, 11.

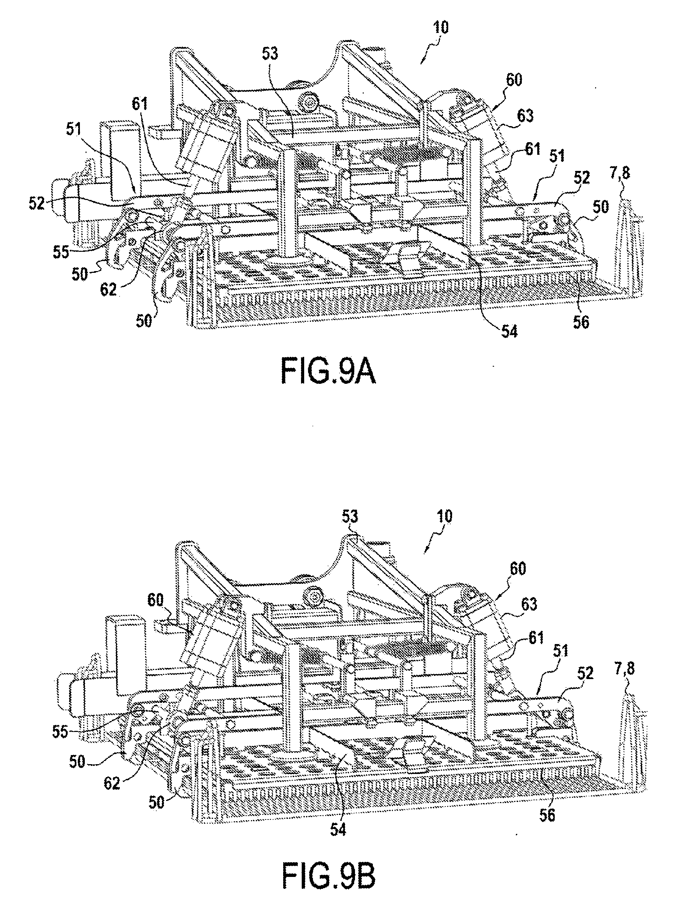

Les **figures 9A** à **9C** représentent un mode de réalisation préféré de l'invention dans lequel les mâchoires **10, 11** du tambour **9** sont équipées de crochets automatiques **50.** Sur ces figures seule une mâchoire **10** est représentée pour clarifier la représentation, le tambour étant formé de deux mâchoires **10, 11** identiques et symétriques l'une de l'autre. Ces crochets **50** sont liés deux à deux par un bras **55** et montés en rotation aux extrémités des bras **52** de deux herses **51** pivotantes et symétriques sur un étrier **53** de raccordement au mécanisme d'entrainement en rotation du tambour **9** de la mâchoire **10,** qui comporte également un chappe **54** de support d'un tapis à peigne **56** de décrochage des objets **O** à retourner au travers des fils des claies **7, 8.** Une extrémité **62** de la tige **61** d'un vérin **60** électrique ou pneumatique est fixée sur le bras **55** de raccordement des crochets deux à deux sur chaque herse **51.** Le corps **63** des vérins est fixé sur l'étrier **53** de la mâchoire **10.**

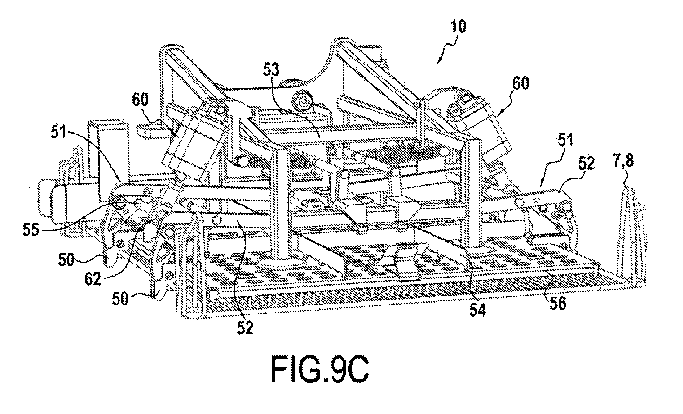

Le crochetage d'une claie **7, 8** par les crochets **50** se fait alors en deux temps (**figures 9B** et **9C**). Dans un premier temps, les vérins **60** exercent par leur tige **61** une traction sur les bras **55** de raccordement des crochets **50.** Ceci provoque leur rotation sur les bras **52** des herses **51** et ainsi le crochetage d'au moins un fil périphérique de la claie **7** qui est alors crochetée sur la mâchoire **10.** Ensuite, les vérins **60** poursuivent leur traction par leur tige **61** provoquant alors (**figure 9C**) le plaquage de la claie **7** contre le peigne **56** et le passage des doigts du peigne **56** entre les fils de la claie pour décrocher les objets éventuellement collés sur la claie **7.** Ainsi lorsque le tambour 9 se ferme pour saisir les objets entre deux claies **7,8,** les objets sont décollés des claies et maintenus entre les doigts des peignes **56** ce qui évite l'enfoncement dans les fils des claies en cas d'objets mous comme des fromages par exemple.

Dans un mode de réalisation avantageux de l'installation **1** de l'invention, le dispositif de retournement **4** peut également être équipé d'organes de secousse des claies retournées **8,** afin de décrocher les produits qui seraient restés solidaires d'une dite claie **8** retournée. Les organes de secousse peuvent notamment comprendre des marteaux mécaniques et/ou pneumatiques et/ou électriques. Ces moyens de secousse sont avantageusement mis en oeuvre après retournement d'une claie **7** et une réouverture limitée des machoires **10, 11** pour décoller les produits retourné sans que ces derniers ne retombent de trop haut sur la claie réceptrice **8,** pour éviter les décallages. Ensuite seulement les machoires sont alors réouvertes en grand.

L'installation **1** de l'invention comporte également dans la colonne d'entrée **5** un mécanisme 18 de sélection et de chargement de claies d'une pile P**1** de claies **7** supportant des objets **O** à retourner pour sortir la claie supérieure **7₁** de ladite pile de claies et la déplacer jusqu'à une zone de chargement **19** localisée au niveau du portique **3** du bâti **2** sur un côté, et en l'espèce à droite sur la figure **1****,** du dispositif de retournement **4.** Le mécanisme de chargement **18** comporte un ascenseur **20** à cliquets **21** aptes à engager et désengager automatiquement la claie supérieure **7₁** de la pile **P1** de claies supportant des objets **O** à retourner dans la colonne d'entrée **5** pour la soulever et la mener dans un plan horizontal dans la zone de chargement **19.** Cet ascenseur **20** est par exemple constitué d'un cadre en U **22** monté coulissant sur une tige de guidage **23** solidaire du bâti **2** par l'intermédiaire d'une noix **24** de guidage, ladite noix enfermant avantageusement des galets de guidage sur la tige de guidage **23.** Les mouvements de montée et de descente de l'ascenceur **20** peuvent être initiés par tous moyens de transmission usuels dans le domaine du machinisme industriel et notamment comprendre un moteur électrique et une transmission mécanique, ou encore des moyens d'entrainement hydraulique et/ou pneumatique. Afin d'éviter les moments de flexion du cadre **22** par rapport à sa tige de guidage **23,** le cadre **22** est également avantageusement repris par deux petits galets ou roulettes **25** sur un montant de guidage **26** vertical parallèle à la tige **23** mais opposée à ladite tige sur le bâti **2.** Ainsi le cadre **22** peut être maintenu horizontal lors de ces déplacements verticaux le long de la tige **23** et du montant **26** de guidage, comme représenté sur les figures

De façon analogue, l'installation de l'invention comporte également dans la colonne de sortie **6** un mécanisme **27** de déchargement adapté pour sélectionner une claie retournée **8** (claie réceptrice) supportant les objets retournés **O'** dans une zone de déchargement **28** localisée au niveau du portique **3** du bâti **2** sur le côté opposé à la zone de chargement, et en l'espèce à gauche sur la figure **1****,** par rapport au dispositif de retournement **4.** Ce mécanisme de déchargement est conçu pour former une pile de claies **8** supportant les objets retournés **O'** dans la colonne de sortie **6.** Il comporte avantageusement, comme le mécanisme de chargement, un descenseur **29** à cliquets **30** aptes à engager automatiquement la claie réceptrice **8** dans la zone de déchargement **28** après que celle-ci ait été retournée et la mener dans la colonne de sortie **6** jusqu'à un pied de claie **31** préalablement disposé à la base de la colonne de sortie **6** par un opérateur pour former une pile **P2** de claies **8** supportant des objets **O'** retournés. Le descenseur **29** présente avantageusement une structure rigoureusement identique à celle de l'ascenseur **20,** constitué d'un cadre en U **32** monté coulissant sur une tige de guidage **33** et un montant de guidage **34** tous deux parallèles de part et d'autre du cadre **32** et solidaires du bâti **2,** le cadre **32** étant mobile verticalement suivant cette tige **33** et montant **34** par l'intermédiaire d'une noix de guidage **31** comprenant des galets en prise sur la tige **33** et des galets ou roulettes **36** en appui sur le montant **34.** Les mouvements de montée et de descente du descenseur **29** peuvent être initiés par tous moyens de transmission usuels dans le domaine du machinisme industriel et notamment comprendre un moteur électrique et une transmission mécanique, ou encore des moyens d'entrainement hydraulique et/ou pneumatique.

Les cliquets **21** de l'ascenseur **20** sont articulés autour d'un axe horizontal solidaire du cadre **22,** ces cliquets s'escamotent au passge d'une claie lors de la descente et reviennent par leur propre poids ou de façon élastique à une position monostable de prise de claie une fois passés sous la claie supérieure **7₁** de la pile **P1.**

Les cliquets **30** du descenseur **29** sont articulés autour d'un axe horizontal solidaire du cadre **32,** ces cliquets sont maintenus de façon élastique à une position relevée monostable dite dégagée des claies ou escamotée. Un dispositif de type galet sur câme ramène ces cliquets vers la position abaissée de prise de claie lorsque le descenseur **29** se trouve dans la zone de déchargement **28** (position haute). Les galets sont solidaires des cliquets et les câmes sont solidaires du bâti **2.** Une fois qu'une claie **8** supportant un objet **O'** retourné est posée sur les cliquets abaissés, le poids de l'ensemble suffit à maintenir les cliquets en position abaissée durant tout le trajet descendant (effort vertical de la charge supportée supérieur aux efforts de rappel des ressorts). Le descenseur amène la claie **8** en appui sur la dernière claie au sommet de la pile **P2;** le descenseur continue sa course, les cliquets alors dégagés de la claie sont rappelés dans leur position relevée par les ressorts, le descenseur **29** peut remonter.

Comme cela se comprend aisément et se remarque notamment sur la figure **1****,** la zone de chargement **19** et la zone de déchargement **28** sont toutes deux situées dans un plan horizontal contenant l'axe de rotation du dispositif de retournement **4** et dans lequel sont déplacées les claies **7, 8** entre les zones de chargement **19** et de déchargement **28** et le dispositif de retournement **4.**

A cet effet, pour effectuer ces déplacements des claies **7, 8** vers le dispositif de retournement **4** et depuis celui-ci, l'installation **1** comporte également un mécanisme de transfert **37** de la claie **7** sélectionnée depuis la zone de chargement **19** dans le dispositif de retournement **4** ainsi qu'un mécanisme de transfert **38** de la claie réceptrice **8** supportant les objets retournés **O'** après retournement dans le dispositif de retournement **4** vers la zone de déchargement **28.**

Les mécanismes de transfert **37, 38** comportent un chariot **39** à bras **40, 41** apte à se déplacer en translation sur un axe **42** articulé sur le bâti **2** dans le plan contenant les zones de chargement **19** et de déchargement **28** pour respectivement amener une claie **7** supportant des objets **O** à retourner de la zone de chargement **19** dans le tambour **9** de retournement et simultanément sortir une claie réceptrice **8** retournée supportant les objets **O'** une fois retournés du tambour **9** de retournement vers la zone de déchargement **28.**

Le chariot pivotant **39** est monté pivotant sur l'axe **42** de translation, qui est lui même perpendiculaire à l'axe de rotation du tambour **9** de retournement.

Le bras **40, 41** du mécanisme de transfert comporte une paire de releveurs **43, 44, 45, 46** munis de crochets **47** rotatifs adaptés pour soutenir une claie **7, 8** durant les phases de transfert entre les zones de chargement et de déchargement et le tambour **9** du dispositif de retournement **4,** les bras releveurs s'étendant perpendiculairement aux bras **40, 41** du chariot **39** et à son axe **42** de translation.

De façon préférée comme représenté sur les figures jointes, les mécanismes de transfert **39, 40** comportent un chariot unique **39** à bras pivotant commun aux deux mécanismes de transfert de claies. Ce chariot et ce bras uniques sont mobiles en translation et en rotation sur l'axe **42** solidaire du bâti **2,** la paire de releveurs **43, 44, 45, 46** étant montée sur le bras du chariot **39.** Une commande, par exemple à vérin pneumatique, permet de fermer ou ouvrir simultanément tous les crochets **43, 44, 45, 46.**

L'installation **1** de l'invention comporte enfin une armoire électrique de commande adaptée à la programmation et la commande du fonctionnement de l'ensemble de l'installation **1.** Cette armoire de commande n'est pas représentée sur les figures pour simplifier la compréhension de l'installation et de sa structure mécanique. L'armoire de commande est de préférence insérée sous le tambour **9** du dispositif de retournement **4** dans un compartiment ménagé dans le bâti **2** sous le portique **3** entre les colonnes d'entrée **5** et de sortie **6** de l'installation, et fixée sur les montants du bâti. Cette armoire de commande comprend notamment un pupitre de commande et de programmation manuels des cycles de chargement/retournement/déchargement des claies **7, 8** par un opérateur de la machine. L'armoire de commande est conforme aux dispositifs électrotechniques et informatiques de commande d'installations industrielles et ne présente aucune caractéristique technique structurelle ou fonctionnelle particulière à l'invention, la programmation de cette armoire de commande relevant des compétences courantes de l'homme de l'art dans le domaine de l'automatisme industriel. Elle permet le pilotage automatique des ascenseur et descenseur de claies des piles **P1, P2** dans les colonnes **5, 6** du bâti **2,** ainsi que le dispositif de retournement **4** et ses mécanismes associés de transfert de claies. Bien entendu, l'armoire de commande comporte des batteries d'alimentation électriques et/ou des moyens de connexion au réseau électrique par prise dans les locaux où l'installation est utilisée.

L'installation **1** de retournement automatique décrite précédemment fonctionne de la façon suivante, par exemple pour retourner des piles de claies **P1** supportant des fromages en affinage dans des hâloirs comme symboliquement représenté sur la **figure 1****.**

Une première pile **P1** de claies **7** supportant des fromages **O** à retourner est introduite sur son pied de claie **31** dans la colonne d'entrée **5** de l'installation **1,** l'ascenseur **20** se trouvant alors en position haute au niveau de la zone de chargement **19** du dispositif de retournement **4.** Avant de débuter les opérations de retournement, un opérateur dispose un pied de claie **31** libre à la base de la colonne de sortie **6** de l'installation **1,** puis lance l'installation **1** à partir du pupitre de commande de l'installation sur l'armoire de commande de cette dernière, non représentée sur les figures. L'armoire de commande peut intégrer un programme spécifique d'initialisation de l'installation **1** en disposant une pile P**1** ne comportant qu'un pied de claie **31** et une claie **7** nue, un cycle automatique spécifique se chargeant de placer la claie nue dans la mâchoire supérieure du retourneur et le pied au bas de la colonne de sortie **6.** L'ascenseur **20** descend alors depuis la zone **19** de chargement jusqu'à ce que les cliquets **21** rencontrent les bords de la claie **7₁** supérieure de la pile **P1** et viennent se glisser sous cette claie, la crochetant ainsi par les bords de façon automatique, lesdits cliquets étant articulés autour d'un axe horizontal solidaire du cadre **22,** ces cliquets s'escamotant au passage d'une claie lors de la descente et revenant par leur propre poids ou de façon élastique à une position monostable de prise de claie une fois passés dessous. Pour connaître la position verticale de l'ascenseur dans la pile P**1,** on peut détecter sa position par mesure linéaire, ou détecter au passage soit la claie **7₁,** soit le mouvement des cliquets signifiant qu'ils ont rencontré une claie. Un système de détection analogue peut être mis en oeuvre pour le descenseur **29** dans la colonne de sortie **6.**

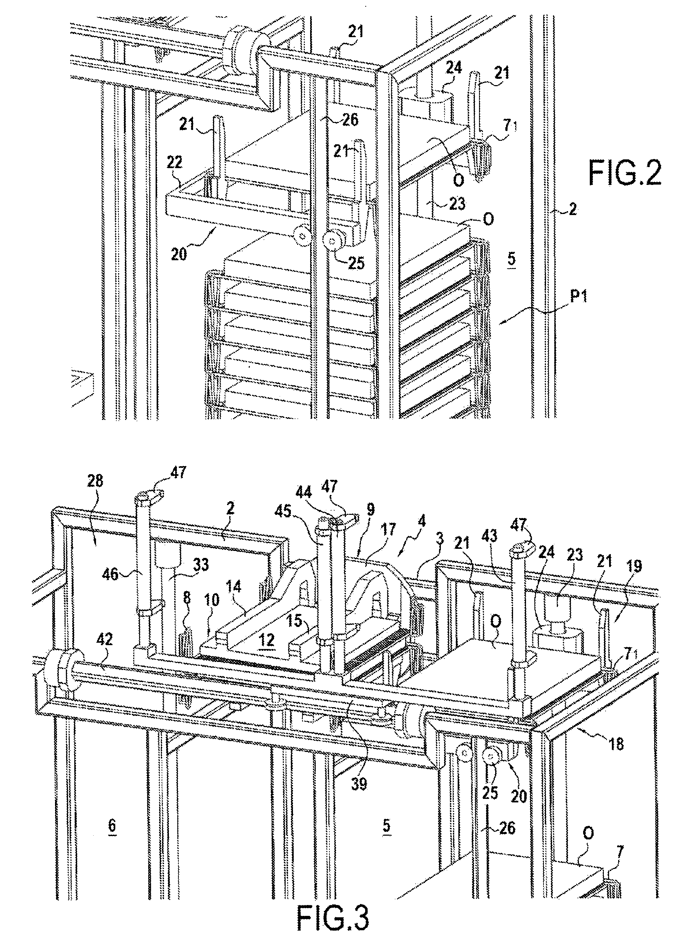

Une fois l'ascenseur **20** en prise par ses cliquets **21** sur la claie supérieure **71** de la pile **P1,** celui-ci élève ladite claie **7₁** jusque dans la zone de chargement **19,** comme représenté sur la figure **2** et la figure **3****,** les bras **40, 41** des mécanismes de transfert et les releveurs **43, 44, 45, 46** étant levés à la verticale **(****figure 3****).**

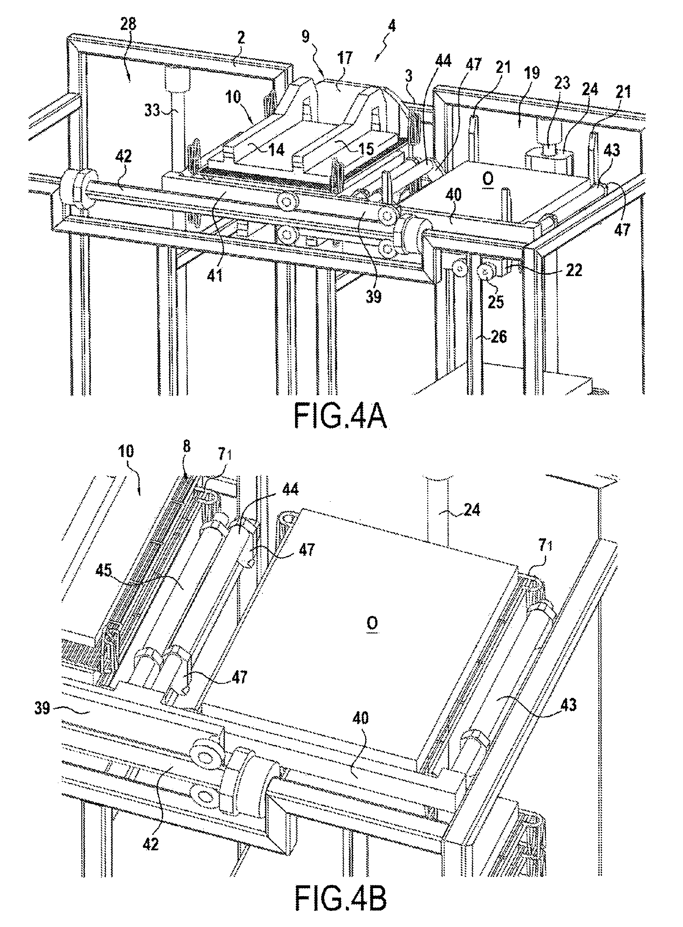

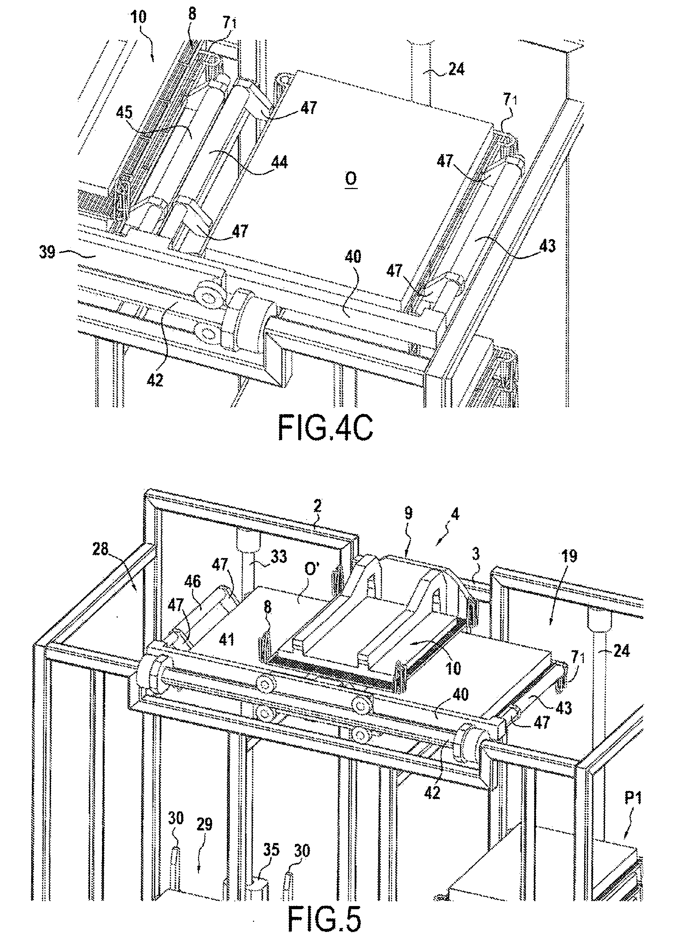

Ensuite, comme représenté aux **figures 4A** à **4C****,** les bras **40, 41** sont abaissés par pivotement du chariot autour de l'axe **42,** de sorte que les releveurs **43, 44, 45, 46** de chaque bras **40, 41** viennent encadrer la claie **7₁** soutenue par l'ascenseur **20** dans la zone de chargement **19** ainsi que les mâchoires **10,11** du dispositif de retournement **4** entre lesquelles se trouve déjà une claie réceptrice retournée **8,** maintenue contre la mâchoire supérieure **10** du tambour **9** par des crochets à masselotte. Lesdites mâchoires **10, 11** sont alors ouvertes et les releveurs **43, 44, 45, 46** sont alors actionnés et pivotés de manière à ce que les crochets **47** des releveurs **43, 44** viennent crocheter la claie **7₁** dans la zone de chargement **19.**

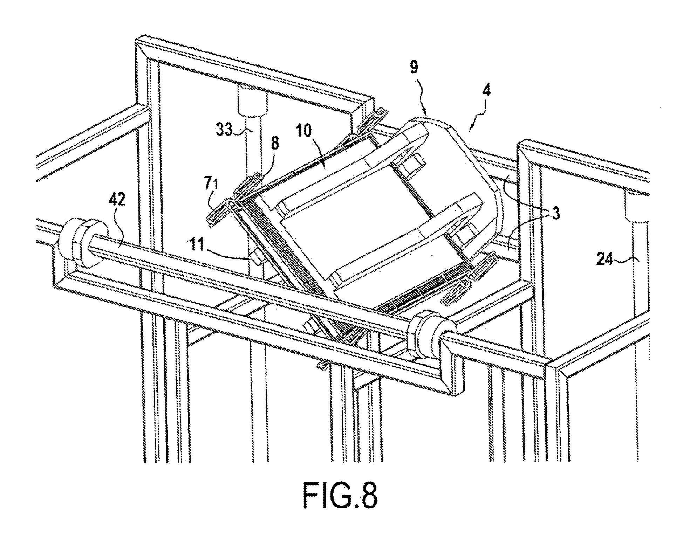

L'ascenseur **20** est ensuite descendu à nouveau jusqu'à la claie supérieure suivante dans la pile **P1** pour la saisir par ses cliquets **21,** libérant ainsi la claie **7₁** soutenue par les crochets **47** des releveurs **43, 44.** La chariot **39** et les bras **40, 41** sont alors translatés vers la gauche suivant l'axe **42** de manière à amener la claie **7₁** entre les mâchoires **10, 11** du tambour **9** du dispositif de retournement **4,** comme représenté à la figure **5****,** jusqu'à ce que ladite claie **71** soit positionnée en miroir de la claie réceptrice **8** crochetée sur la mâchoire supérieur **10** du tambour **9.** Lesdites mâchoires **10, 11** sont alors fermées pour serrer les deux claies **7₁, 8** sur les fromages **O** et permettre la libération de la claie **7₁** par les crochets **47** des releveurs. Lesdits releveurs sont ensuite redressés à la verticale par pivotement du chariot de transfert sur l'axe **42** puis translation vers la droite dans un plan vertical pour un retour à la position de départ. Le tambour **9** est alors pivoté à **180°** sur son axe par son mécanisme d'entrainement pour retourner la claie **7₁** et les fromages **O** sur la claie réceptrice **8** comme représenté sur la figure **8****.** Suite à cette rotation, la mâchoire **10** se retrouve alors en position inférieure et la claie réceptrice **8** en position retournée sur cette mâchoire **10.** Pendant la rotation du tambour **9,** l'ascenseur **20** a amené en tant masqué une seconde claie de la pile P**1** dans la zone de chargement **19.** Les bras et releveurs sont alors à nouveau abaissés pour saisir d'une part la nouvelle claie à retourner dans ladite zone de chargement mais également saisir par les releveurs **45, 46** du bras **41** la claie réceptrice **8** retournée supportant les fromages **O** retournés. Les mâchoires **10, 11** du tambour sont alors ouvertes pour libérer ladite claie réceptrice **8,** la claie **7₁** se trouvant alors crochetée par les crochets à masselotte de la mâchoire **11** et maintenue ainsi contre cette mâchoire afin de servir de claie réceptrice pour la prochaine claie à retourner de la pile **P1.** Le chariot de transfert est alors à nouveau translaté horizontalement vers la gauche de manière à décaler la claie réceptrice **8** vers la zone de déchargement **28** et dans le même temps introduire la nouvelle claie à retourner dans le tambour **9.**

Le descenseur monte alors dans la colonne de sortie 6 pour venir s'encliqueter sur les bords de la claie réceptrice **8** dans la zone de déchargement **28** et dans le même temps les mâchoires **10, 11** du tambour sont à nouveau serrées et les bras et releveurs redressés et ramenés en position de départ vers la droite de l'installation.

Le tambour **9** est alors à nouveau pivoté sur son axe pour retourner la deuxième claie de la pile P**1 ;** pendant ce temps, le descenseur descend la première claie réceptrice **8** jusque sur le pied de claie **31** dans la colonne de sortie **6** pour former une pile P**2** de claies **8** et de fromages **O'** retournés et l'ascenseur **20** amène une nouvelle claie de la pile P**1** dans la zone de chargement **19.**

Une fois le retournement effectué, la claie retournée est prise en charge par le mécanisme de transfert pour être déchargée par le descenseur pendant que la nouvelle claie est introduite pour retournement dans le tambour **9** comme précédemment décrit pour la première claie réceptrice **8,** et ainsi de suite jusqu'à ce que toute la pile P**1** ait été retournée pour former la pile de claies et fromages retournés **P2.**

Les opérations de retournement par le dispositif de retournement **4** se faisant en tant masqué par rapport au chargement et déchargement des claies dans les colonnes **5, 6** de l'installation, il est possible aux opérateurs de l'installation de faire fonctionner celle-ci en continue en chargeant une nouvelle pile dans l'installation dès que la dernière claie d'une pile précédente à été prise en charge par l'ascenseur **20** puis ensuite de décharger une pile **P2** pour en former une nouvelle avant que la première claie de la nouvelle pile **P1'** n'ait été retournée et déchargée par le descenseur dans la colonne de sortie. Avantageusement, il est possible de doter l'installation de l'invention d'un convoyeur d'entrée et d'un convoyeur de sortie (convoyeurs à chaine ou courroie ou à pas de pèlerin par exemple) pour faciliter l'introduction et la sortie automatique d'une nouvelle pile de claies à retourner et d'une pile de claies retournées des colonnes d'entrée et de sortie de l'installation.

Ainsi, l'installation de l'invention permet de réaliser de façon automatique, à grande cadence et de façon fiable le retournement de préparations telles que des fromages disposés sur des claies en supprimant tous les efforts manuels de retournement pour les opérateurs, le tout dans une encombrement réduit compatible avec un travail dans des espaces clos et à atmosphère contrôlée comme des hâloirs d'affinage.

Il convient également de noter que chaque élément structurel de l'installation **1** de la présente invention est avantageusement constitué d'une matière ou d'une manière adaptée à un travail en milieu humide ainsi qu'à des cycles de nettoyage par jet et/ou mousse nettoyante et produits désinfectants. Tous les éléments métalliques sont ainsi notamment traités contre la corrosion.

## Revendications

1. Installation (**1**) de retournement automatique d'objets (**O**), notamment de préparations alimentaires, conditionnés sur des claies (**7**) empilées les unes sur les autres, comportant :
- un bâti (**2**) délimitant une colonne d'entrée (**5**) dans laquelle peut être placée une pile (**P1**) de claies (**7**) supportant chacune des objets à retourner et une colonne de sortie (**6**) dans laquelle peut être formée une pile (**P2**) de claies (**8**) supportant des objets retournés (**O'**), et
- un mécanisme de transfert (**37**) d'une claie supportant des objets à retourner depuis une zone de chargement de claies (**7**) à retourner dans un dispositif de retournement (**4**),
- un mécanisme de transfert (**38**) d'une claie réceptrice(**8**) supportant les objets retournés (**O'**) après retournement depuis le dispositif de retournement (**4**) vers une zone de déchargement,
**caractérisé en ce que** le dispositif de retournement (**4**) comporte un tambour (**9**) à mâchoires mobiles (**10**, **11**) monté mobile uniquement en rotation sur un axe horizontal solidaire du bâti, lesdites mâchoires mobiles étant aptes à saisir et maintenir une claie (**7**) supportant des objets (**O**) à retourner contre une claie réceptrice (**8**) tenue sur une mâchoire (**10**, **11**) du tambour lors du retournement du dispositif de retournement autour de son axe pour retourner les objets, et **en ce que** les mécanismes de transfert (**37**, **38**) comportent un chariot (**39**) pivotant à bras (**40**, **41**) apte à se déplacer en translation sur un axe (**42**) solidaire du bâti dans un plan contenant les zones de chargement et de déchargement ainsi que l'axe de rotation du tambour (**9**) pour respectivement amener une claie (**7**) supportant des objets à retourner (**O**) de la zone de chargement dans le mécanisme de retournement (**4**) et simultanément sortir une claie réceptrice (**8**) supportant les objets (**O'**) une fois retournés du mécanisme de retournement vers la zone de déchargement.

2. Installation de retournement automatique selon la revendication 1, **caractérisée en ce que** le chariot (**39**) pivotant à bras de chaque mécanisme de transfert est monté pivotant sur son axe (**42**) de translation, qui est perpendiculaire à l'axe de rotation du tambour de retournement.

3. Installation de retournement automatique selon l'une des revendications 1 à 2, **caractérisée en ce que** le chariot (**39**) pivotant à bras (**40**, **41**) comporte des releveurs (**43**, **44**, **45**, **46**) munis de crochets (**47**) rotatifs adaptés pour soutenir une claie (**7**, **8**) durant une phase de transfert entre les zones de chargement (**19**) et de déchargement (**28**) et le dispositif de retournement (**4**), les releveurs s'étendant perpendiculairement au bras (**40**, **41**) du chariot et à son axe de translation.

4. Installation de retournement automatique selon l'une des revendications 1 à 3, **caractérisée en ce que** les mécanismes de transfert (**37**, **38**) comportent un chariot (**39**) à bras (**40**, **41**) pivotant commun mobile en translation et en rotation sur un axe (**42**) solidaire du bâti, les releveurs étant montés sur le bras (**40**, **41**) du chariot (**39**).

5. Installation de retournement automatique selon l'une des revendications 1 à 4, **caractérisée en ce que** les mâchoires mobiles (**10**, **11**) du dispositif de retournement comportent des crochets (**50**) de maintien automatique d'une claie (**7**, **8**) sur les mâchoires (**10**, **11**).

6. Installation de retournement automatique selon l'une des revendications 1 à 5, **caractérisée en ce que** les crochets de blocage automatique sont des crochets à masselotte gravitaire qui maintiennent automatiquement la claie située sous la machoire du haut, et libère automatiquement la claie posée sur la machoire du bas.

7. Installation de retournement automatique selon l'une des revendications 1 à 6, **caractérisée en ce que** les mâchoires mobiles (**10**, **11**) comportent des tapis de serrage des claies.

8. Installation de retournement automatique selon la revendication 7, **caractérisée en ce que** les tapis de serrage sont constitués à base de un matériau souple tel que de silicone.

9. Installation de retournement automatique selon l'une des revendications 1 à 8, **caractérisée en ce qu'**elle comporte des moyens d'entrainement en rotation du dispositif de retournement (**4**) autour de son axe de rotation et des moyens d'actionnement des mâchoires mobiles (**10**, **11**) dudit dispositif de retournement.

10. Installation de retournement automatique selon la revendication 9, **caractérisée en ce que** les moyens d'entraînement en rotation du dispositif de retournement (**4**) et les moyens d'actionnement des mâchoires mobiles sont de type mécaniques et pneumatiques et/ou électriques.

11. Installation de retournement automatique selon l'une des revendications 1 à 10, **caractérisée en ce qu'**elle comporte des organes de secousse d'une claie retournée.

12. Installation de retournement automatique selon la revendication 11, **caractérisée en ce que** les organes de secousse sont des marteaux mécaniques et/ou pneumatiques et/ou électriques.

13. Installation de retournement automatique selon l'une des revendications 1 à 12, **caractérisée en ce qu'**elle comportee un mécanisme (**18**) de chargement d'une claie (**7**) supérieure d'une pile (**P1**) de claies supportant des objets (**O**) à retourner placée dans la colonne d'entrée du bâti (**2**), apte à déplacer ladite claie supérieure jusqu'à la zone de chargement (**19**), située au dessus de la pile (**P1**).

14. Installation de retournement automatique selon la revendication 13, **caractérisé en ce que** le mécanisme de chargement (**18**) comporte un ascenseur (**20**) à cliquets aptes à engager et désengager automatiquement la claie supérieure (**7₁**) de la pile (**P1**) de claies supportant des objets (**O**) à retourner dans la colonne d'entrée (**5**) du bâti pour la soulever et la mener dans la zone de chargement (**19**).

15. Installation de retournement automatique selon l'une des revendications 1 à 14, **caractérisée en ce qu'**elle comporte un mécanisme (**27**) de déchargement adapté pour sélectionner la claie réceptrice (**8**) supportant les objets (**O'**) retournés dans la zone de déchargement (**28**) et former une pile (**P2**) de claies (**8**) supportant les objets (**O'**) retournés dans la colonne de sortie (**6**) du bâti (**2**).

16. Installation de retournement automatique selon la revendication 15, **caractérisé en ce que** le mécanisme (**27**) de déchargement comporte un descenseur (**29**) à cliquets aptes à engager et désengager automatiquement une claie réceptrice (**8**) supportant les objets (**O'**) retournés dans la zone de déchargement (**28**) et la mener dans la colonne de sortie (**6**) pour former une pile (**P2**) de claies (**8**) supportant des objets retournés.

17. Installation de retournement automatique selon l'une des revendications 1 à 13, **caractérisée en ce que** le bâti (**2**) est monté sur des roulettes et comporte des moyens de traction manuels et/ou à moteur.

18. Installation de retournement automatique selon la revendication 14, **caractérisé en ce que** le bâti (**2**) est monté sur roulettes motorisées.

19. Installation de retournement automatique selon l'une des revendications 1 à 15, **caractérisée en ce qu'**elle comporte une armoire de commande, cette armoire de commande comprenant un pupitre de commande et de programmation manuels par un opérateur de la machine.

20. Installation de retournement automatique selon la revendication 16, **caractérisée en ce que** l'armoire de commande comporte des batteries d'alimentation électriques et/ou des moyens de connexion au réseau électrique.

## Claims

1. An installation (**1**) for the automatic turning of objects (**O**), in particular food preparations packaged on racks (**7**) stacked on once another, comprising:
- a frame (**2**) delimiting an input column (**5**) in which a pile (**P1**) of racks (**7**) clan be placed each carrying objets to be turned, and an output column (**6**) in which a pile (**P2**) of racks (**8**) can be formed carrying turned objects (**O'**), and
- a mechanism (**37**) for transferring a rack carrying objects to be turned, from a loading area of the racks (**7**) to be turned towards a turning device (**4**),
- a mechanism (**38**) for transferring a receiver rack (**8**) carrying the turned objects (**O'**) after turning from the turning device (**4**) towards an unloading area,
**characterized in that** the turning device (**4**) comprises a drum (**9**) having mobile jaws (**10**, **11**) mounted mobile solely in rotation on a horizontal pin secured to the frame, said mobile jaws being capable of grasping and holding a rack (**7**) carrying objects (**O**) to be turned against a receiver rack (**8**) held on a jaw (**10**, **11**) of the drum when the turning device rotates about its axis to turn the objects, and **in that** the transfer mechanisms (**37**, **38**) comprise a pivoting trolley (**39**) having arms (**40**, **41**) and able to move in translation over a shaft (**42**) secured to the frame over a plane containing the loading and unloading areas and the rotational axis of the drum (**9**) so as respectively to bring a rack (**7**) carrying objects to be turned (**O**) from the leading area info the turning mechanism (**4**) and simultaneously to remove a receiver rack (**8**) carrying objects (**O'**)after turning from the turning mechanism towards the unloading area.

2. The automatic turning Installation according to claim 1, **characterized in that** the pivoting trolley (**39**) with arms of each transfer mechanism is pivot mounted on its translation shaft (**42**) which is perpendicular to the rotational axis of the turning drum.

3. The automatic turning installation according to one of claims 1 to 2, **characterized in that** the pivoting trolley (**39**) with arms (**40**, **41**) comprises lifters (**43**, **44**, **45**, **46**) provided with rotating hooks (**47**) adapted to support a rack (**7**, **8**) during a transfer phase between the loading (**19**) and unloading (**28**) areas and the turning device (**4**), the lifters extending perpendicular to the arm (**40**, **41**) of the trolley and its axis of translation.

4. The automatic turning installation according to one of claims 1 to 3 **characterized in that** the transfer mechanisms (**37**, **38**) comprise a common pivoting trolley (**39**) with arms (**40**, **41**) mobile in translation and in rotation on a shaft (**42**) secured to the frame, the lifters being amounted on the arm (**40**, **41**) of the trolley (**39**).

5. The automatic turning Installation according to one of claims 1 to 4 **characterized in that** the mobile jaws (**10**, **11**) of the turning device comprise hooks (**50**) for automatically supporting a rack (**7**, **8**) on the jaws (**10**, **11**).

6. The automatic turning installation according to one of claims 1 to 5, **characterized in that** the automatic blocking hooks are gravity flyweight hooks which automatically hold the rack located underneath the top jaw and automatically release the rack laid on the flower jaw.

7. The automatic turning installation according to one of claims 1 to 6, **characterized in that** the mobile jaws (**10**, **11**) comprise belts dripping the racks.

8. The automatic turning installation according to claim 7, **characterized in that** the gripping belts are formed of a flexible material such as silicone.

9. The automatic turning installation according to one of claims 1 to 8, **characterized in that** it comprises means for the driving the turning device (**4**) in rotation about its axis of rotation and means for actuating the mobile jaws (**10**, **11**) of said turning device.

10. The automatic turning Installation according to claim 9, **characterized in that** the means for driving the turning device (**4**) in rotation and the means for actuating the mobile jaws are of mechanical and pneumatic and/or electric type.

11. The automatic turning installation according to one of claims 1 to 10, **characterized in that** it comprises members for shaving an overturned rack.

12. The automatic turning Installation according to claim 11, **characterized in that** the shaking members are mechanical and/or pneumatic and/or electric hammers.

13. The automatic turning installation according to one of claims 1 to 12, **characterized in that** it comprises a mechanism (**18**) for loading an upper rack (**7**) of a pile (**P1**) of racks carrying objects (**O**) to be turned positioned in the input column of the frame (**2**), and capable of moving said upper rack as far as the loading area (**19**) located above the pile (**P1**).

14. The automatic turning Installation according to claim 13, **characterized in that** the loading mechanism (**18**) comprises a ratchet elevator (**20**) capable of automatically engaging and disengaging the supper rack (**7₁**) from the pile (**P1**) of racks carrying objects (**O**) to be turned in the input column (**5**) of the frame, to lift and convey this rack towards the loading area (**19**).

15. The automatic turning Installation according to one of claims 1 to 14 **characterized in that** it comprises an unloading mechanism (**27**) adapted to select the receiver rack (**8**) carrying the turned objects (**O'**) in the unloading area (**28**) and to form a pile (**P2**) of racks (**8**) carrying turned objects (**O'**) in the output column (**6**) of the frame (**2**).

16. The automatic turning Installation according to claim 15, **characterized in that** the unloading mechanism (**27**) comprises a ratchet lowering device (**29**) capable of automatically engaging and disengaging a receiver rack (**8**) carrying turned objects (**O'**) in the unloading area (**28**) and of conveying this rack to the output column (**6**) to form a pile (**P2**) of racks (**8**) carrying turned objects.

17. The automatic turning installation according to one on claims 1 to 13, **characterized in that** the frame (**2**) is amounted on castors and comprises manual and/or motorized traction means.

18. The automatic turning installation according to claim 14, **characterized in that** the frame (**2**) is mounted on motorized castors.

19. The automatic turning installation according to one of claims 1 to 15, **characterized in that** it comprises a control box, this control box comprising a manual control and programming panel operated by a machine operator.

20. The automatic turning installation according to claim 16, **characterized in that** the control box comprises electric powering batteries and/or means for confection to the electric mains supply.

## Patentansprüche

1. Anlage (1) zum automatischen Wenden von Objekten (O), insbesondere von Lebensmittelzubereitungen, die auf übereinander gestapelten Horden (7) konditioniert werden, umfassend:
- ein Gestell (2), das eine Eingangssäule (5), in der ein Stapel (P1) von Horden (7), die jeweils zu wendende Objekte tragen, plaziert werden kann, sowie eine Ausgangssäule (6) begrenzt, in der ein Stapel (P2) von Horden (8), die gewendete Objekte (O' tragen, gebildet werden kann, und
- einen Mechanismus zum Überführen (37) einer zu wendende Objekte tragenden Horde von einem Bereich zum Laden von zu wendenden Horden (7) in eine Wendevorrichtung (4),
- einen Mechanismus zum Überführen (38) einer die gewendeten Objekte (O`) tragenden Aufnahmehorde (8) nach dem Wenden von der Wendevorrichtung (4) zu einem Entladebereich,
**dadurch gekennzeichnet, daß** die Wendevorrichtung (4) eine Trommel (9) mit beweglichen Backen (10, 11) umfaßt, die lediglich drehbeweglich um eine mit dem Gestell fest verbundene horizontale Achse angebracht ist, wobei die beweglichen Backen geeignet sind, eine zu wendende Objekte (O) tragende Horde (7) zu erfassen und beim Wenden der Wendevorrichtung um ihre Achse gegen eine an einer Backe (10, 11) der Trommel gehaltene Aufnahmehorde (8) zu halten, um die Objekte zu wenden, und daß die Überführungsmechanismen (37, 38) einen schwenkbaren Schlitten (39) mit Armen (40, 41) umfassen, der geeignet ist, sich auf einer mit dem Gestell fest verbundenen Achse (42) in einer Ebene, welche die Lade- und Entladebereiche sowie die Rotationsachse der Trommel (9) enthält, verschiebend zu bewegen, um jeweils eine zu wendende Objekte (O) tragende Horde (7) von dem Ladebereich in den Wendemechanismus (4) zu bringen und um gleichzeitig eine die einmal gewendeten Objekte (O') tragende Aufnahmehorde (8) aus dem Wendemechanismus heraus zu dem Entladebereich zu führen.

2. Anlage zum automatischen Wenden nach Anspruch 1, **dadurch gekennzeichnet, daß** der schwenkbare Schlitten (39) mit Armen eines jeden Überführungsmechanismus um seine Verschiebeachse (42) schwenkbar angebracht ist, die zu der Rotationsachse der Wendetrommel senkrecht verläuft.

3. Anlage zum automatischen Wenden nach einem der Ansprüche 1 bis 2, **dadurch gekennzeichnet, daß** der schwenkbare Schlitten (39) mit Armen (40, 41) Heber (43, 44, 45, 46) umfaßt, die mit drehbaren Haken (47) versehen sind, welche dazu ausgelegt sind, eine Horde (7, 8) während einer Überführungsphase zwischen den Lade- (19) und Entladebereichen (28) und der Wendevorrichtung (4) zu tragen, wobei die Heber zu dem Arm (40, 41) des Schlittens und zu dessen Verschiebeachse senkrecht verlaufen.

4. Anlage zum automatischen Wenden nach einem der Ansprüche 1 bis 3, **dadurch gekennzeichnet, daß** die Überführungsmechanismen (37, 38) einen gemeinsamen schwenkbaren Schlitten (39) mit Armen (40, 41) umfassen, der auf/um eine(r) mit dem Gestell fest verbundene(n) Achse (42) verschiebe- und drehbeweglich ist, wobei die Heber an dem Arm (40, 41) des Schlittens (39) angebracht sind.

5. Anlage zum automatischen Wenden nach einem der Ansprüche 1 bis 4, **dadurch gekennzeichnet, daß** die beweglichen Backen (10, 11) der Wendevorrichtung Haken (50) zum automatischen Halten einer Horde (7, 8) an den Backen (10, 11) umfassen.

6. Anlage zum automatischen Wenden nach einem der Ansprüche 1 bis 5, **dadurch gekennzeichnet, daß** die Haken zum automatischen Blockieren Haken mit Schwerkraftgewicht sind, welche die unter der Backe befindliche Horde automatisch von oben halten und die auf die Backe aufgesetzte Horde automatisch von unten freigeben.

7. Anlage zum automatischen Wenden nach einem der Ansprüche 1 bis 6, **dadurch gekennzeichnet, daß** die beweglichen Backen (10, 11) Matten zum Festklemmen der Horden umfassen.

8. Anlage zum automatischen Wenden nach Anspruch 7, **dadurch gekennzeichnet, daß** die Klemmatten auf der Basis eines flexiblen Materials wie Silikon gebildet sind.

9. Anlage zum automatischen Wenden nach einem der Ansprüche 1 bis 8, **dadurch gekennzeichnet, daß** sie Mittel zum Drehantreiben der Wendevorrichtung (4) um ihre Rotationsachse sowie Mittel zum Betätigen der beweglichen Backen (10, 11) der Wendevorrichtung umfaßt.

10. Anlage zum automatischen Wenden nach Anspruch 9, **dadurch gekennzeichnet, daß** die Drehantriebsmittel der Wendevorrichtung (4) und die Mittel zum Betätigen der beweglichen Backen vom mechanischen und pneumatischen und/oder elektrischen Typ sind.

11. Anlage zum automatischen Wenden nach einem der Ansprüche 1 bis 10, **dadurch gekennzeichnet, daß** sie Organe zum Rütteln einer gewendeten Horde umfaßt.

12. Anlage zum automatischen Wenden nach Anspruch 11, **dadurch gekennzeichnet, daß** die Rüttelorgane mechanische und/oder pneumatische und/oder elektrische Hämmer sind.

13. Anlage zum automatischen Wenden nach einem der Ansprüche 1 bis 12, **dadurch gekennzeichnet, daß** sie einen Mechanismus (18) zum Laden einer oberen Horde (7) eines Stapels (P1) von zu wendende Objekte (O) tragenden Horden, der in der Eingangssäule des Gestells (2) plaziert ist, umfaßt, welcher geeignet ist, die obere Horde bis zu dem oberhalb des Stapels (P1) gelegenen Ladebereich (19) zu bewegen.

14. Anlage zum automatischen Wenden nach Anspruch 13, **dadurch gekennzeichnet, daß** der Lademechanismus (18) einen Aufzug (20) mit Sperrklinken umfaßt, die geeignet sind, die obere Horde (7₁) des Stapels (P1) von zu wendende Objekte (O) tragenden Horden in der Eingangssäule (5) des Gestells automatisch einzuklinken und auszuklinken, um sie anzuheben und in den Ladebereich (19) zu führen.

15. Anlage zum automatischen Wenden nach einem der Ansprüche 1 bis 14, **dadurch gekennzeichnet, daß** sie einen Entlademechanismus (27) umfaßt, der dazu ausgelegt ist, die die gewendeten Objekte (O') tragende Aufnahmehorde (8) in dem Entladebereich (28) auszuwählen und einen Stapel (P2) von die gewendeten Objekte (O`) tragenden Horden (8) in der Ausgangssäule (6) des Gestells (2) zu bilden.

16. Anlage zum automatischen Wenden nach Anspruch 15, **dadurch gekennzeichnet, daß** der Entlademechanismus (27) eine Senkvorrichtung (29) mit Sperrklinken umfaßt, die geeignet sind, eine die gewendeten Objekte (O') tragende Aufnahmehorde (8) in dem Entladebereich (28) automatisch einzuklinken und auszuklinken und sie in die Ausgangssäule (6) zu führen, um einen Stapel (P2) von gewendete Objekte tragenden Horden (8) zu bilden.

17. Anlage zum automatischen Wenden nach einem der Ansprüche 1 bis 13, **dadurch gekennzeichnet, daß** das Gestell (2) auf Rollen angebracht ist und manuelle und/oder motorische Zugmittel umfaßt.

18. Anlage zum automatischen Wenden nach Anspruch 14, **dadurch gekennzeichnet, daß** das Gestell (2) auf motorisierten Rollen angebracht ist.

19. Anlage zum automatischen Wenden nach einem der Ansprüche 1 bis 15, **dadurch gekennzeichnet, daß** sie einen Steuerschrank umfaßt, wobei dieser Steuerschrank ein Pult zum manuellen Steuern und Programmieren durch eine Bedienungsperson der Maschine umfaßt.

20. Anlage zum automatischen Wenden nach Anspruch 16, **dadurch gekennzeichnet, daß** der Steuerschrank Stromversorgungsbatterien und/oder Mittel zum Anschließen an das Stromnetz umfaßt.
